# EUROPÄISCHE PATENTSCHRIFT

(11) **EP 0 815 150 B1**
(45) Veröffentlichungstag und Bekanntmachung des Hinweises auf die Patenterteilung: **08.12.1999**
(21) Anmeldenummer: 96907337.8
(22) Anmeldetag: 01.03.1996
(51) Int. Cl.: C08F 290/04, C08F 255/00, C08F 8/14, C08F 8/32, C08F 8/44, C08F 8/34, C11D 3/37, C10L 1/22, C10M 149/06

(54) **COPOLYMERISATE AUS UNGESÄTTIGTEN DICARBONSÄUREN ODER DEREN ANHYDRIDEN UND VINYLTERMINIERTEN OLIGOOLEFINEN SOWIE DEREN UMSETZUNGSPRODUKTE MIT NUCLEOPHILEN AGENTIEN**
COPOLYMERS OF UNSATURATED DICARBOXYLIC ACIDS OR THEIR ANHYDRIDES AND VINYL-TERMINATED OLIGO-OLEFINES AND THEIR REACTION PRODUCTS WITH NUCLEOPHILIC AGENTS
COPOLYMERES D'ACIDES DICARBOXYLIQUES INSATURES OU DE LEURS ANHYDRIDES ET OLIGOOLEFINES A TERMINAISON VINYLIQUE AINSI QUE LEURS PRODUITS DE REACTION AVEC DES AGENTS NUCLEOPHILES

(30) Priorität: 13.03.1995 DE 19508656
(43) Veröffentlichungstag der Anmeldung: 07.01.1998
(73) Patentinhaber: BASF AKTIENGESELLSCHAFT, 67056 Ludwigshafen (DE)
(72) Erfinder: FAUL, Dieter, D-67150 Niederkirchen (DE); RÖSCH, Joachim, 67063 Ludwigshafen (DE); RATH, Hans, Peter, D-67269 Grünstadt (DE); GÜNTHER, Wolfgang, D-67582 Mettenheim (DE); OPPENLÄNDER, Knut, D-67061 Ludwigshafen (DE); MACH, Helmut, D-69115 Heidelberg (DE)
(86) Internationale Anmeldenummer: EP9600879
(87) Internationale Veröffentlichungsnummer: WO9628486

(56) Entgegenhaltungen:
- DE-A- 4 330 971
- POLYMERS FOR ADVANCED TECHNOLOGIES, Bd. 4, Nr. 7, 1.August 1993, Seiten 465-474, XP000396652 MULHAUPT R ET AL: "REACTIVE BLENDING OF POLYPROPYLENE/POLYAMIDE-6 IN THE PRESENCE OF TAILOR-MADE SUCCINIC ANHYDRIDE-TERMINATED OLIGOPROPENE COMPATIBILIZERS*"
- DATABASE WPI Section Ch, Week 9420 Derwent Publications Ltd., London, GB; Class A17, AN 94-163759 XP002007505 & JP,A,06 107 442 (SANYO CHEM IND LTD) , 19.April 1994

## Beschreibung

Die vorliegende Erfindung betrifft neue funktionelle Gruppen tragende Copolymerisate aus ungesättigten Dicarbonsäuren oder deren Anhydriden und vinylterminierten Oligoolefinen, ein Verfahren zur Herstellung dieser Copolymerisate sowie deren Umsetzungsprodukte mit nucleophilen Agentien. Weiterhin betrifft die Erfindung verschiedene Verwendungen solcher Umsetzungsprodukte.

Aus der nachveröffentlichten deutschen Patentanmeldung DE-A 43 30 971 (1) sind funktionelle Gruppen tragende Terpolymerisate aus
- 20 bis 60 mol-% monoethylenisch ungesättigten C₄- bis C₆-Dicarbonsäuren oder deren Anhydriden,
- 10 bis 70 mol-% Oligomeren des Propens oder von verzweigten 1-Olefinen mit 4 bis 10 C-Atomen und einen mittleren Molekulargewicht von 300 bis 5000 und
- 1 bis 50 mol-% copolymerisierbarer monoethylenisch ungesättigter Verbindungen
bekannt. Öllösliche Umsetzungsprodukte dieser Terpolymerisate mit Aminen eignen sich als Kraft- und Schmierstoffadditive.

In Database WPI Section Ch, Week 9420 Derwent Publications Ltd., London, GB; Class A 17, AN 94-163759, XP 002007505 (entsprechend JP-A 06/107 442) wird die Verwendung von mittels eines Radikalinitiators hergestellten Addukten aus ungesättigten Carbonsäuren wie Maleinsäureanhydrid und niedermolekularen Propylenharzen mit endständiger Doppelbindung bei der Faserherstellung beschrieben.

In der WO-A 90/03359, (2) werden Polymerisate beschrieben, die als Zusätze in Schmierölen verwendet werden können und teilweise dispergierende Eigenschaften für darin enthaltende Schlamm- und Feststoffteilchen besitzen. Außerdem weisen diese Polymerisate teilweise viskositätsindexverbessernde Eigenschaften auf, d.h. sie sorgen dafür, daß die Viskosität eines Schmieröls bei Temperaturerhöhung deutlich weniger abfällt als in einem Schmieröl ohne einen solchen Zusatz.

Die aus (2) bekannten Polymerisate sind aus Maleinsäure oder Fumarsäure oder Derivaten hiervon und einem Olefin, dessen Molekulargewicht hinreichend groß ist, so daß das aus diesen Monomeren hergestellte Polymerisat öllöslich ist, aufgebaut und mit Aminen umgesetzt. In Mengen von mindestens 20 % muß dieses Olefin Alkylvinylidengruppen tragen.

Die in der Druckschrift (2) offenbarten Polymerisate zeigen nicht für alle Anwendungsgebiete befriedigende Eigenschaften, insbesondere läßt das Viskositäts-Temperatur-Verhalten von Schmierölen, die diese Polymerisate als Zusatz enthalten, in vielen Fällen noch zu wünschen übrig. Weiterhin befriedigt die Dispergierwirkung dieser Verbindungen in der technischen Anwendung nicht in allen Fällen.

Aufgabe der vorliegenden Erfindung war es daher, Schmieröladditive bereitzustellen, welche die Nachteile des Standes der Technik nicht mehr aufweisen.

Demgemäß wurden funktionelle Gruppen tragende Copolymerisate I gefunden, die aus:
(a) 30 bis 70 mol-% mindestens einer monoethylenisch ungesättigten C₄- bis C₁₂-Dicarbonsäure oder deren Anhydrid und
(b) 30 bis 70 mol-% mindestens eines Oligomeren eines 1-Olefins mit 3 bis 14 C-Atomen, welches zu mindestens 85 % als Isomer mit einer endständigen Vinylgruppe der Formel -CH=CH₂ vorliegt, ein mittleres Molekulargewicht von 300 bis 10 000 aufweist und aus mindestens 3 Olefinmolekülen aufgebaut ist,
bestehen.

Die erfindungsgemäßen Copolymerisate I enthalten keine weiteren Comonomeren außer (a) und (b).

Die erfindungsgemäßen Copolymerisate I dienen als Zwischenprodukte für die Herstellung von verschiedensten technischen Mitteln mit teilweise überragenden Anwendungseigenschaften, wie nachfolgend ausgeführt wird.

Als Monomere(a) kommen vorzugsweise monoethylenisch ungesättigte C₄- bis C₆-Dicarbonsäuren oder deren Anhydride, z.B. Maleinsäure, Fumarsäure, Itaconsäure, Mesaconsäure, Methylenmalonsäure, Citraconsäure, Maleinsäureanhydrid, Itaconsäureanhydrid, Citraconsäureanhydrid und Methylenmalonsäureanhydrid sowie deren Mischungen untereinander, in Betracht. Bevorzugt wird Maleinsäureanhydrid.

Als Monomere(b) kommen Oligomere des Propens oder eines linearen 1-Olefins mit 4 bis 14 Kohlenstoffatomen in Betracht. Diese Oligomere sind aus mindestens 3 Olefinmolekülen aufgebaut. Sie enthalten einen Anteil von mindestens 85 %, insbesondere mindestens 90 % an vinylterminiertem Isomer. Vinyl-terminierte Oligoolefine sind reaktiver als die entsprechenden vinyliden-terminierten Makromere. Bei der radikalischen Copolymerisation können daher höhere Polymerisationsgrade und daraus resultierend höhere Molekulargewichte erzielt werden, was sich positiv auf die anwendungstechnischen Eigenschaften der Endprodukte auswirkt. Ihr mittleres Molekulargewicht beträgt 300 bis 10 000, insbesondere 500 bis 5000. Es sind beispielsweise Oligomere des Propens, n-Butens, n-Pentens, n-Hexens und n-Decens zu nennen, wobei die copolymerisierbare Endgruppe des Oligomeren zu mindestens 85 % in Form einer Vinylgruppe vorliegt. Bevorzugt werden Oligopropene und Oligopropen-Gemische mit 9 bis 400 C-Atomen, insbesondere solche mit 12 bis 300 C-Atomen. Solche Vinyl-terminierten Oligoolefine sind beispielsweise entsprechend der Lehre der EP-A 268 214 (Beispiel 2) mittels eines Metallocenkatalysators vom Typ Bis-pentamethylcyclopentadienyl-zirkoniumdichlorid zugänglich.

Die Copolymerisate I enthalten die Monomeren (a) in Mengen von 30 bis 70 mol-%, vorzugsweise 40 bis 60 mol-%, und die Monomeren (b) in Mengen von 30 bis 70 mol-%, vorzugsweise 40 bis 60 mol-%.

Besonders bevorzugt werden funktionelle Gruppen tragende Copolymerisate I, bei denen die Komponente (a) Maleinsäureanhydrid und die Komponente (b) ein Oligopropen oder ein Oligopropen-Gemisch mit jeweils 9 bis 400 C-Atomen ist.

Gegenstand der vorliegenden Erfindung ist auch ein Verfahren zur Herstellung von funktionellen Gruppen tragenden Copolymerisaten I, welches dadurch gekennzeichnet ist, daß man
(a) 30 bis 70 mol-% mindestens einer monoethylenisch ungesättigten C₄- bis C₁₂-Dicarbonsäure oder deren Anhydrid mit
(b) 30 bis 70 mol-% mindestens eines Oligomeren eines 1-Olefins mit 3 bis 14 C-Atomen, welches zu mindestens 85 % als Isomer mit einer endständigen Vinylgruppe der Formel -CH=CH₂ vorliegt, ein mittleres Molekulargewicht von 300 bis 10 000 aufweist und aus mindestens 3 Olefinmolekülen aufgebaut ist, radikalisch polymerisiert.

Die Copolymerisate I können nach allen bekannten üblichen Polymerisationstechniken hergestellt werden, z.B. durch Substanz-, Emulsions-, Suspensions-, Fällungs- und Lösungspolymerisation. Bei allen genannten Polymerisationsverfahren wird üblicherweise unter Ausschluß von Sauerstoff gearbeitet, vorzugsweise in einem Stickstoffstrom.

Für alle Polymerisationsmethoden werden die üblichen Apparaturen verwendet, z.B. Autoklaven und Kessel. Besonders bevorzugt wird die Substanzpolymerisation der Monomeren (a) und (b). Sie kann bei Temperaturen von 60 bis 300°C, vorzugsweise von 80 bis 200°C durchgeführt werden, wobei die niedrigste zu wählende Polymerisationstemperatur vorzugsweise ca. 20°C über der Glastemperatur des gebildeten Polymeren liegt. Je nach angestrebtem Molekulargewicht der Copolymere werden die Polymerisationsbedingungen gewählt. Polymerisationen bei hohen Temperaturen ergeben normalerweise Copolymerisate mit niedrigen Molekulargewichten, während bei niedrigeren Polymerisationstemperaturen normalerweise Polymerisate mit höheren Molekulargewichten entstehen.

Die Copolymerisation wird vorzugsweise in Gegenwart von Radikale bildenden Verbindungen durchgeführt. Man benötigt von diesen Verbindungen bis zu 10 Gew.-%, vorzugsweise 0,2 bis 5 Gew.-%, bezogen auf die bei der Copolymerisation eingesetzten Monomeren. Geeignete Polymerisationsinitiatoren sind beispielsweise Peroxidverbindungen wie tert.-Butylperpivalat, tert.-Butylperneodecanoat, tert.-Butylperethylhexanoat, tert.-Butylperisobutyrat, Di-tert.-butylperoxid, Di-tert.-amylperoxid, Diacetylperoxodicarbonat, Dicyclohexylperoxodicarbonat oder Azoverbindungen wie z.B. 2,2'-Azobis(isobutyronitril). Diese Initiatoren können alleine oder als Mischung untereinander angewendet werden. Sie werden bei der Substanzpolymerisation vorzugsweise separat oder in Form einer Lösung in den Polymerisationsreaktor eingebracht. Die Monomeren (a) und (b) können bei Temperaturen oberhalb von 200°C auch in Abwesenheit von Polymerisationsinitiatoren copolymerisiert werden.

Um niedrigmolekulare Polymerisate herzustellen, ist es oft zweckmäßig, die Copolymerisation in Gegenwart von Reglern durchzuführen. Hierfür können übliche Regler verwendet werden, wie C₁- bis C₄-Aldehyde, Ameisensäure oder organische SH-Gruppen enthaltende Verbindungen wie 2-Mercaptoethanol, 2-Mercaptopropanol, Mercaptoessigsäure, tert.-Butylmercaptan, n-Octylmercaptan, n-Dodecylmercaptan oder tert.-Dodecylmercaptan. Die Polymerisationsregler werden im allgemeinen in Mengen von 0,1 bis 10 Gew.-%, bezogen auf die Monomeren, eingesetzt.

Um höhermolekulare Copolymerisate herzustellen, ist es oft zweckmäßig, bei der Polymerisation in Gegenwart von Kettenverlängern zu arbeiten. Solche Kettenverlängerer sind Verbindungen mit zwei-oder mehrfach ethylenisch ungesättigten Gruppen wie Divinylbenzol, Pentaerythrittriallylether oder Ester von Glykolen wie Glykoldiacrylat, Glycerintriacrylat oder Polyethylenglykoldiacrylate. Sie können bei der Polymerisation in Mengen bis zu 5 Gew.-% zugesetzt werden.

Die Copolymerisation kann kontinuierlich oder diskontinuierlich durchgeführt werden. Die Molmassen der Copolymerisate I liegen in der Regel bei 1000 bis 100 000, insbesondere bei 5000 bis 50 000.

Die Copolymerisate I können mit nucleophilen Agentien, d.h. mit NH-, OH- oder SH-funktionellen Verbindungen umgesetzt und so für unterschiedliche Einsatzfelder derivatisiert werden. Demgemäß sind derartige Umsetzungsprodukte II auch Gegenstand der vorliegenden Erfindung.

So liefert die Umsetzung der Copolymerisate I mit wäßrigem Alkali- oder Erdalkalimetallhydroxid, beispielsweise wäßriger Kalium- oder Natriumhydroxid-Lösung, stabile wäßrige Dispersionen (Umsetzungsprodukte IIa), welche sich als Dispergiermittel für Wasch- und Reinigungsmittel-Formulierungen und als Hydrophobiermittel für Leder und Pelzfelle eignen. Gegenstand der vorliegenden Erfindung sind ebenfalls wäßrige Wasch- und Reinigungsmittel-Formulierungen, die die Umsetzungsprodukte IIa als Dispergiermittel in üblichen Mengen enthalten.

Die Umsetzung der Copolymerisate I mit gesättigten oder ungesättigten aliphatischen Alkoholen mit 8 bis 30 C-Atomen, insbesondere 10 bis 22 C-Atome, also Fettalkoholen wie Stearylalkohol oder Behenylalkohol, liefert öllösliche Umsetzungsprodukte IIb, welche sich als Fließverbesserer und Paraffindispergatoren für Rohöle und Mineralölraffinate eignen. Gegenstand der vorliegenden Erfindung sind ebenfalls Rohöle und Mineralölraffinate, die die öllöslichen Umsetzungsprodukte IIb als Fließverbesserer und Paraffindispergatoren in üblichen Mengen enthalten.

Die Umsetzung der Copolymerisate I mit primären, sekundären oder tertiären Mono- oder Polyaminen oder Mischungen hieraus, welche mindestens einen C₆- bis C₃₀-, insbesondere C₈- bis C₂₂-Alkyl- oder Alkenylrest tragen, also Fettaminen wie Tridecylamin, liefert Umsetzungsprodukte IIc, welche sich als Korrosionsinhibitoren für Metallsubstrate eignen.

Die Umsetzung der Copolymerisate I mit Aminen der Formel NHR¹R², wobei die Reste R¹ und R² gleich oder verschieden sein können und für Wasserstoff, aliphatische oder aromatische Kohlenwasserstoffreste, primäre oder sekundäre, aromatische oder aliphatische Aminoalkylenreste, Polyaminoalkylenreste, Hydroxyalkylenreste, Polyoxyalkylenreste, die gegebenenfalls Aminoendgruppen tragen, Heteroaryl- oder Heterocyclylreste, die gegebenenfalls Aminoendgruppen tragen, stehen können, oder gemeinsam mit dem Stickstoffatom, an das sie gebunden sind, einen Ring bilden, in dem noch weitere Heteroatome vorhanden sein können, liefert Umsetzungsprodukte IId, welche sich als Additive für Schmierstoffe und Kraftstoffe eignen.

Als Aminkomponenten HNR¹R² kommen hierbei beispielsweise in Betracht:
- Ammoniak;
- aliphatische und aromatische, primäre und sekundäre Amine mit 1 bis 50 Kohlenstoffatomen wie Methylamin, Ethylamin, Propylamin, Di-n-butylamin oder Cyclohexylamin;
- Amine, in denen R¹ und R² mit dem Stickstoffatom, an das sie gebunden sind, einen gemeinsamen Ring bilden, der noch weitere Heteroatome enthalten kann, wie Morpholin, Pyridin, Piperidin, Pyrrol, Pyrimidin, Pyrrolin, Pyrrolidin, Pyrazin oder Pyridazin;
- Hydroxyalkylen- und Polyoxyalkylenreste tragende Amine, in denen R¹ und/oder R² für einen Rest 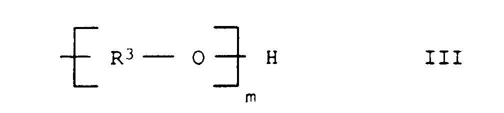 stehen, wobei R³ einen C₂-C₁₀-Alkylenrest bedeutet und m eine ganze Zahl von 1 bis 30 ist, wie Ethanolamin, 2-Aminopropanol-1 oder Neopentanolamin;
- Aminoendgruppen tragende Polyoxyalkylenamine, in denen R¹ und/oder R² für einen Rest 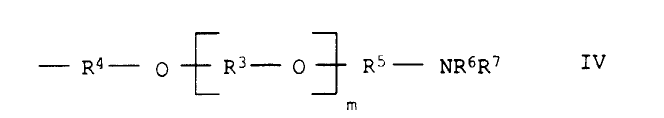 steht, wobei R³, R⁴, R⁵ für C₂-C₁₀-Alkylenreste stehen, m die oben angegebene Bedeutung hat und R⁶ und R⁷ für Wasserstoff, gegebenenfalls Hydroxy- oder Amino-substituiertes C₁-C₁₀-Alkyl oder C₆-C₁₀-Aryl steht, wie Polyoxypropylendiamine oder Bis(3-aminopropyl)tetrahydrofurane.

Bevorzugt werden als Aminkomponente jedoch Polyamine, in denen R¹ und/oder R² für einen Rest der Formel V 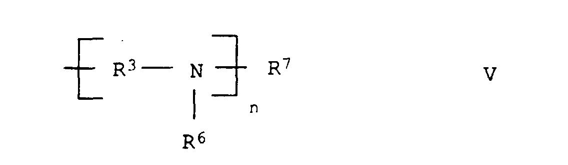 stehen, in der die Reste R³, R⁶ und R⁷ die oben angegebene Bedeutung haben und n eine ganze Zahl von 1 bis 6 ist. Als Polyamine kommen insbesondere in Betracht: Ethylendiamin, Propylendiamin, Dimethylaminopropylamin, Diethylentriamin, Dipropylentriamin, Triethylentetramin, Tripropylentetramin, Tetraethylenpentamin, Ethylaminoethylamin, Dimethylaminoethylamin, Isopropylaminopropylamin, Ethylendipropylentetramin, 2-Di-isopropylaminoethylamin, Aminoethylethanolamin, Ethylenpropylentriamin, N,N,N',N'-Tetra-(3-aminopropyl)-ethylendiamin, 2-(3-Aminopropyl)cyclohexylamin, 2,5-Dimethylhexandiamin-2,5 und N,N,N',N",N"-Penta-3-aminopropyl)-dipropylentriamin. Weiterhin sind Polyamine bevorzugt, die einen Heterocyclus als Strukturbestandteil enthalten, z.B. Aminoethylpiperazin.

Als Aminkomponente können auch Mischungen verschiedener Amine eingesetzt werden.

Die erfindungsgemäßen Umsetzungsprodukte IId werden in an sich bekannter Weise durch Umsetzung von Copolymerisaten I mit den genannten Aminen erhalten. Das molare Verhältnis der Komponenten hängt von der Zahl der Säure- bzw. Anhydridgruppen im Copolymerisat I ab. Diese kann in bekannter Weise z.B. durch Titration mit einer starken Base bestimmt werden. Im allgemeinen werden pro Mol Amin 0,1 bis 3 Äquivalente Säure- oder Anhydridgruppen im Polymer eingesetzt. In der Regel werden die Ausgangsmaterialien zur Umsetzung vermischt und auf 30 bis 200°C erhitzt. Vorzugsweise erfolgt die Reaktion unter einer Schutzgasatmosphäre. Die Reaktion kann ohne oder in Lösungsmitteln vorgenommen werden. Als inerte Lösungsmittel sind aliphatische und aromatische Kohlenwasserstoffe wie Toluol und Xylol ebenso zu nennen wie Mineralöle. Der Fortgang der Reaktion kann IR-spektroskopisch verfolgt werden.

Gegenstand der vorliegenden Anmeldung sind ebenfalls Schmierstoffe und Kraftstoffe, welche die öllöslichen Umsetzungsprodukte IId in den unten angegebenen Mengen enthalten.

Bei den Schmierstoffen handelt es sich um additivierte synthetische, teilsynthetische und mineralische Öle, vorzugsweise solche, die als Motorenöle Verwendung finden. Die synthetischen Öle umfassen synthetische Ester und Polymere von α-Olefinen. Die Umsetzungsprodukte IId werden den Schmierstoffen im allgemeinen als Konzentrat in einem inerten Lösungsmittel wie einem Mineralöl zugesetzt. Diese Konzentrate können weitere übliche Zusätze wie Korrosionsinhibitoren, Verschleißschutz, Detergentien, Antioxidantien und Stockpunktverbesserer enthalten.

Die Umsetzungsprodukte IId werden den Schmierstoffen in Mengen von 1 bis 15 Gew.-%, vorzugsweise in Mengen von 0,5 bis 10 Gew.-% zugesetzt.

In Kraftstoffen wie Ottobenzin oder Dieselkraftstoff werden die Umsetzungsprodukte IId als Detergentien zur Reinhaltung des Einlaßsystems eingesetzt. Aufgrund ihrer dispergierenden Eigenschaften wirken sie sich auch positiv auf Motorschmierstoffe aus, in die sie während des Motorbetriebs gelangen können. Es werden dazu 20 bis 5000 ppm, vorzugsweise 50 bis 1000 ppm, bezogen auf den Kraftstoff, zugesetzt.

Die erfindungsgemäßen öllöslichen Umsetzungsprodukte IId weisen generell in nahezu allen Schmierstoffen ein hervorragendes Viskositäts-Temperatur-Verhalten auf. Weiterhin zeigen sie in nahezu allen Fällen eine ausgezeichnete Dispergierwirkung. Die überlegenen anwendungstechnischen Eigenschaften der Umsetzungsprodukte IId werden in den nachfolgenden Beispielen veranschaulicht.

### Beispiel

### 1. Herstellung der Vinyl-terminierten Oligopropene (b)

### Allgemeine Herstellungsvorschrift:

In einem 2 1-Rührautoklaven wurden 30 ml 1,5 molare Methylaluminoxanlösung in Toluol vorgelegt, 900 ml (13,3 mol) flüssiges Propen aufkondensiert und auf die in Tabelle 1 angegebene Temperatur erwärmt. Dabei stellte sich ein Druck von 20 bar ein. Anschließend wurden 64,3 mg (0,17 mmol) Bis-pentamethylcyclopentadien-zirkoniumdichlorid, gelöst in 7 ml einer 1,5 molaren Methylaluminoxanlösung in Toluol, zugegeben und während der in Tabelle 1 angegebenen Zeitdauer oligomerisiert. Das Aluminium/ Zirkonium-Atomverhältnis betrug 250 : 1. Es wurde eine Ausbeute von 590 ml Oligomerengemisch erhalten. Die mittleren Molekulargewichte wurden mittels Gelpermeationschromatographie und eng verteilten Polystyrolstandards bestimmt.

**Tabelle 1:**

| Daten der eingesetzten Oligopropene (b) | | | | |
|---|---|---|---|---|
| Oligopropen | Oligomerisierungstemperatur [°C] | Oligomerisierungszeit [min] | mittleres Molekulargewicht | Vinyl-Anteil [%] |
| b1 | 50 | 60 | 750 | 92 |
| b2 | 35 | 120 | 900 | 93 |
| b3 | 20 | 180 | 1400 | 93 |

### 2. Herstellung der Copolymerisate I

### Beispiel 2.1

200 g des Oligomeren b1 wurden in einem Reaktor im schwachen Stickstoffstrom auf 100°C erhitzt, und innerhalb von 4 Stunden wurden 32,7 g Maleinsäureanhydrid (in flüssiger Form als Schmelze von ca. 75°C) zudosiert. Gleichzeitig wurde innerhalb von 4 Stunden eine Lösung von 3,5 g tert.-Butylperoctoat, gelöst in 10 g Toluol, zudosiert. Anschließend wurde auf 150°C erhitzt und eine Lösung von 2,3 g Di-tert.-butylperoxid in 10 g Tuluol innerhalb von 1 Std. zudosiert und nach beendetem Zulauf wurde noch 0,5 Stunden bei dieser Temperatur nachpolymerisiert. Das so erhaltene Copolymer hatte eine Molmasse von 12 000.

### Beispiel 2.2

95 g des Oligomeren b2 wurden in einem Reaktor in schwachen Stickstoffstrom auf 150°C erhitzt, und innerhalb von 4 Stunden wurden 10,3 g Maleinsäureanhydrid (in flüssiger Form als Schmelze von ca. 75°C) zudosiert. Gleichzeitig wurde innerhalb von 4,5 Stunden eine Lösung von 2,1 g Di-tert.-butylperoxid, gelöst in 5 g Toluol, zudosiert. Anschließend wurde noch eine Stunde bei dieser Temperatur nachpolymerisiert. Das so erhaltene Copolymer hatte eine Molmasse von 48 000.

### Beispiel 2.3

201,5 g des Oligomeren b3 wurden in einem Reaktor im schwachen Stickstoffstrom auf 150°C erhitzt, und innerhalb von 4 Stunden wurden 7,3 g Maleinsäureanhydrid (in flüssiger Form als Schmelze von ca. 75°C) zudosiert. Gleichzeitig wurde innerhalb von 4,5 Std. eine Lösung von 3,1 g Di-tert-butylperoxid, gelöst in 10 g Toluol, zudosiert. Anschließend wurde noch eine Stunde bei dieser Temperatur nachpolymerisiert. Das so erhaltene Copolymer hatte eine Molmasse von 15 600.

Die Molmassen der Copolymeren aus Beispiel 2.1, 2.2 und 2.3 wurden mit Hilfe der Hochdruck-Gel-Permeationschromatographie bestimmt. Als Elutionsmittel diente Tetrahydrofuran. Die Eichung erfolgte mit eng verteilten Fraktionen von Polystyrol.

### 3. Herstellung der öllöslichen Umsetzungsprodukte IId

### Allgemeine Herstellungsvorschrift:

Ein Copolymer gemäß den Beispielen 2.1 bis 2.3 wurde in Xylol bei 70°C vorgelegt, mit einem Amin bzw. Polyamin versetzt und unter Rückfluß erhitzt, bis die zu erwartende Menge Reaktionswasser abgeschieden war. Nach Entfernung des Lösungsmittels fiel das Produkt in Form eines hellgelben bis bernsteinfarbenen, viskosen Rückstandes an. Die IR-Absorptionsbanden der Produkte lagen bei ca. 1770 und ca. 1700 cm⁻¹. Wie in Tabelle 2 angegeben, wurden folgende Umsetzungen gemacht:

**Tabelle 2**

| Beispiel | Polymer nach Beispiel | Aminkomponente | molares Verhältnis Anhydrid/Amin |
|---|---|---|---|
| 3.1 | 2.1 | Triethylentetramin | 1:1 |
| 3.2 | 2.1 | Triethylentetramin | 1,85:1 |
| 3.3 | 2.1 | N-Aminoethylpiperazin | 1,5:1 |
| 3.4 | 2.1 | N-Aminoethylpiperazin | 2:1 |
| 3.5 | 2.2 | Triethylentetramin | 1:1 |
| 3.6 | 2.2 | N-Aminoethylpiperazin | 1,5:1 |
| 3.7 | 2.2 | Polyoxypropylendiamin (Molekulargewicht ca. 400) | 2:1 |
| 3.8 | 2.3 | Triethylentetramin | 1:1 |
| 3.9 | 2.3 | Triethylentetramin | 2:1 |

### 4. Herstellung der Vergleichsprodukte

### Vergleichsadditiv V1

### Reaktionsprodukt aus Copolymerisat gemäß Beispiel 6 der WO-A-90/03359 (2) und Triethylentetramin

Die genannten Ausgangsstoffe wurden in Analogie zu den obigen Beispielen 3 im molaren Verhältnis von 1 : 1 umgesetzt.

### Vergleichsadditiv V2

### Reaktionsprodukt aus Copolymerisat gemäß Beispiel 6 von (2) und Triethylentetramin

Die genannten Ausgangsstoffe wurden in Analogie zu den obigen Beispielen 3 im molaren Verhältnis von 2 : 1 umgesetzt.

### 5. Prüfung des Viskosität-Temperatur-Verhaltens

Die Additive wurden in einer Konzentration von 6 Gew.-% in einem 5W-30-Motorenöl getestet. Die Ergebnisse sind in Tabelle 3 zusammengestellt.

**Tabelle 3**

| Additiv nach Beispiel | Viskosität bei 100°C [mm²s⁻¹] nach Ubbelohde | Viskosität bei -25°C [mPas] CCS | Löslichkeit |
|---|---|---|---|
| ohne Additiv | 7,55 | 1900 | - |
| 3.1 | 10,89 | 2950 | klar |
| 3.2 | 10,23 | 3100 | klar |
| 3.5 | 13,33 | 3200 | schwach trüb |
| 3.8 | 12,42 | 3300 | klar |
| 3.9 | 14,40 | 3400 | klar |
| V1 | 9,00 | 3100 | trüb |
| V2 | 9,19 | 3200 | trüb |

Die erfindungsgemäßen Additive (3.1, 3.2, 3.5, 3.8 und 3.9) sind denen nach dem Stand der Technik (V1 und V2) wegen ihrer größeren viskositätserhöhenden Wirkung bei hoher Temperatur deutlich überlegen. Die Tieftemperaturviskosität der erfindungsgemäß additivierten Öle liegt im Bereich des Standes der Technik.

### 6. Prüfung der Dispergierwirkung

Zur Prüfung der Dispergierwirkung wurde ein Tüpfeltest durchgeführt, wie er in "Les Huiles pour Moteurs et la Graissage des Moteurs", A.Schilling, Vol.1, S. 89f, 1962, beschrieben ist. Es wurden dazu 3 gew.-%ige Mischungen der Additive in einem Dieselrußöl hergestellt. Die so erhaltenen Dispersionen wurden auf einem Filterpapier wie ein Chromatogramm entwickelt. Die Bewertungsskala reicht dabei von 0 bis 1000 : je höher der erzielte Wert, desto besser die Dispergierwirkung des Additivs. Die Ergebnisse sind in Tabelle 4 zusammengestellt.

**Tabelle 4**

| Additiv nach Beispiel | 10 min bei RT ohne Wasser | 10 min bei RT 1 % Wasser | 10 min bei 250°C ohne Wasser | 10 min bei 250°C mit Wasser |
|---|---|---|---|---|
| 3.2 | 651 | 624 | 658 | 638 |
| 3.5 | 671 | 670 | 652 | 676 |
| 3.8 | 659 | 675 | 688 | 671 |
| 3.9 | 679 | 694 | 706 | 718 |
| V1 | 583 | 593 | 511 | 603 |
| V2 | 570 | 686 | 605 | 558 |
| RT= Raumtemperatur | | | | |

Die erfindungsgemäßen Additive (3.2, 3.5, 3.8 und 3.9) zeigen in nahezu allen Fällen eine signifikant bessere Dispergierwirkung als die Additive nach dem Stand der Technik (V1 und V2).

## Patentansprüche

1. Funktionelle Gruppen tragende Copolymerisate I bestehend aus
(a) 30 bis 70 mol-% mindestens einer monoethylenisch ungesättigten C₄- bis C₁₂-Dicarbonsäure oder deren Anhydrid und
(b) 30 bis 70 mol-% mindestens eines Oligomeren eines 1-olefins mit 3 bis 14 C-Atomen, welches zu mindestens 85 % als Isomer mit einer endständigen Vinylgruppe der Formel -CH=CH₂ vorliegt, ein mittleres Molekulargewicht von 300 bis 10 000 aufweist und aus mindestens 3 Olefinmolekülen aufgebaut ist.

2. Funktionelle Gruppen tragende Copolymerisate I nach Anspruch 1, bei denen die Komponente (a) Maleinsäureanhydrid und die Komponente (b) ein Oligopropen oder ein Oligopropen-Gemisch mit jeweils 9 bis 400 C-Atomen ist.

3. Verfahren zur Herstellung von funktionellen Gruppen tragende Copolymerisate I gemäß Anspruch 1 oder 2, dadurch gekennzeichnet, daß man
(a) 30 bis 70 mol-% mindestens einer monoethylenisch ungesättigten C₄- bis C₁₂-Dicarbonsäure oder deren Anhydrid mit
(b) 30 bis 70 mol-% mindestens eines Oligomeren eines 1-Olefins mit 3 bis 14 C-Atomen, welches zu mindestens 85 % als Isomer mit einer endständigen Vinylgruppe der Formel -CH=CH₂ vorliegt, ein mittleres Molekulargewicht von 300 bis 10 000 aufweist und aus mindestens 3 Olefinmolekülen aufgebaut ist,
radikalisch polymerisiert.

4. Umsetzungsprodukte II von Copolymerisaten I gemäß Anspruch 1 oder 2 mit NH-, OH- oder SH-funktionellen Verbindungen.

5. Umsetzungsprodukte IIa von Copolymerisaten I gemäß Anspruch 1 oder 2 mit wäßrigem Alkali- oder Erdalkalimetallhydroxid.

6. Verwendung von Umsetzungsprodukten IIa gemäß Anspruch 5 in Form von wäßrigen Dispersionen als Dispergiermittel für Wasch- und Reinigungsmittel-Formulierungen.

7. Wäßrige Wasch- und Reinigungsmittel-Formulierungen, enthaltend Umsetzungsprodukte IIa gemäß Anspruch 5 als Dispergiermittel in üblichen Mengen.

8. Verwendung von Umsetzungsprodukten IIa gemäß Anspruch 5 in Form von wäßrigen Dispersionen als Hydrophobiermittel für Leder und Pelzfelle.

9. Öllösliche Umsetzungsprodukte IIb von Copolymerisaten I gemäß Anspruch 1 oder 2 mit gesättigten oder ungesättigten aliphatischen Alkoholen mit 8 bis 30 C-Atomen.

10. Verwendung von öllöslichen Umsetzungsprodukten IIb gemäß Anspruch 9 als Fließverbesserer und Paraffindispergatoren für Rohöle und Mineralölraffinate.

11. Rohöle und Mineralölraffinate, enthaltend öllösliche Umsetzungsprodukte IIb gemäß Anspruch 9 als Fließverbesserer und Paraffindispergatoren in üblichen Mengen.

12. Umsetzungsprodukte IIc von Copolymerisaten I gemäß Anspruch 1 oder 2 mit primären, sekundären oder tertiären Mono- oder Polyaminen, welche mindestens einen C₆- bis C₃₀-Alkyl- oder -Alkylenrest tragen.

13. Verwendung von Umsetzungsprodukten IIc gemäß Anspruch 12 als Korrosionsinhibitoren für Metallsubstrate.

14. Öllösliche Umsetzungsprodukte IId von Copolymerisaten I gemäß Anspruch 1 oder 2 mit Aminen der Formel HNR¹R², wobei die Reste R¹ und R² gleich oder verschieden sein können und für Wasserstoff, aliphatische oder aromatische Kohlenwasserstoffreste, primäre oder sekundäre, aromatische oder aliphatische Aminoalkylenreste, Polyaminoalkylenreste, Hydroxyalkylenreste, Polyoxyalkylenreste, die gegebenenfalls Aminoendgruppen tragen, Heteroaryl- oder Heterocyclylreste, die gegebenenfalls Aminoendgruppen tragen, stehen können, oder gemeinsam mit dem Stickstoffatom, an das sie gebunden sind, einen Ring bilden, in dem noch weitere Heteroatome vorhanden sein können.

15. Verwendung der öllöslichen Umsetzungsprodukte IId gemäß Anspruch 14 als Additive für Schmierstoffe und Kraftstoffe.

16. Schmierstoffe, enthaltend öllösliche Umsetzungsprodukte IId gemäß Anspruch 14 in Mengen von 1 bis 15 Gew.-%.

17. Kraftstoffe, enthaltend öllösliche Umsetzungsprodukte IId gemäß Anspruch 14 in Mengen von 20 bis 5000 ppm.

## Claims

1. A copolymer I which carries functional groups and consists of
(a) from 30 to 70 mol% of at least one monoethylenically unsaturated C₄-C₁₂-dicarboxylic acid or the anhydride thereof and
(b) from 30 to 70 mol% of at least one oligomer of a 1-olefin of 3 to 14 carbon atoms, at least 85% of which is present as an isomer having a terminal vinyl group of the formula -CH=CH₂, which has an average molecular weight of from 300 to 10,000 and is composed of at least 3 olefin molecules.

2. A copolymer I which carries functional groups as claimed in claim 1, in which the component (a) is maleic anhydride and the component (b) is an oligopropene or an oligopropene mixture, each of 9 to 400 carbon atoms.

3. A process for the preparation of a copolymer I which carries functional groups, as claimed in claim 1 or 2, which comprises subjecting
(a) from 30 to 70 mol% of at least one monoethylenically unsaturated C₄-C₁₂-dicarboxylic acid or the anhydride thereof to free radical polymerization with
(b) from 30 to 70 mol% of at least one oligomer of a 1-olefin of 3 to 14 carbon atoms, at least 85% of which is present as an isomer having a terminal vinyl group of the formula -CH=CH₂, which has an average molecular weight of from 300 to 10,000 and is composed of at least 3 olefin molecules.

4. A reaction product II of a copolymer I as claimed in claim 1 or 2 with compounds containing NH, OH or SH functional groups.

5. A reaction product IIa of a copolymer I as claimed in claim 1 or 2 with an aqueous alkali metal or alkaline earth metal hydroxide.

6. Use of a reaction product IIa as claimed in claim 5 in the form of an aqueous dispersion as a dispersant for detergent and cleaning agent formulations.

7. An aqueous detergent or cleaning agent formulation, containing a reaction product IIa as claimed in claim 5 as a dispersant in a conventional amount.

8. Use of a reaction product IIa as claimed in claim 5 in the form of an aqueous dispersion as a water repellent for leather and skins.

9. An oil-soluble reaction product IIb of a copolymer I as claimed in claim 1 or 2 with a saturated or unsaturated aliphatic alcohol of 8 to 30 carbon atoms.

10. Use of an oil-soluble reaction product IIb as claimed in claim 9 as a flow improver or paraffin dispersant for crude oils and refined mineral oil fractions.

11. A crude oil or a refined mineral oil fraction, containing an oil-soluble reaction product IIb as claimed in claim 9 as a flow improver or paraffin dispersant in a conventional amount.

12. A reaction product IIc of a copolymer I as claimed in claim 1 or 2 with a primary, secondary or tertiary mono- or polyamine which carries at least one C₆-C₃₀-alkyl or C₆-C₃₀-alkylene radical.

13. Use of a reaction product IIc as claimed in claim 12 as a corrosion inhibitor for metal substrates.

14. An oil-soluble reaction product IId of a copolymer I as claimed in claim 1 or 2 with an amine of the formula HNR¹R², where R¹ and R² may be identical or different and may each be hydrogen, an aliphatic or aromatic hydrocarbon radical, a primary or secondary, aromatic or aliphatic aminoalkylene radical, a polyaminoalkylene radical, a hydroxyalkylene radical or a polyoxyalkylene radical, which may carry terminal amino groups, or may each be a hetaryl or heterocyclyl radical which may carry terminal amino groups, or, together with the nitrogen atom to which they are bonded, form a ring in which further hetero atoms may also be present.

15. Use of an oil-soluble reaction product IId as claimed in claim 14 as an additive for lubricants and fuels.

16. A lubricant containing from 1 to 15% by weight of an oil-soluble reaction product IId as claimed in claim 14.

17. A fuel containing from 20 to 5000 ppm of an oil-soluble reaction product IId as claimed in claim 14.

## Revendications

1. Copolymères I portant des groupements fonctionnels, constitués de
(a) 30-70% en moles d'au moins un acide dicarboxylique en C₄-C₁₂ à insaturation monoéthylénique ou de son anhydride et
(b) 30-70% en moles d'au moins un oligomère d'une 1-oléfine ayant 3-14 atomes de C, se trouvant pour au moins 85% sous la forme d'un isomère comportant un groupement vinyle terminal de formule -CH=CH₂, présentant une masse moléculaire moyenne de 300-10 000 et construit à partir d'au moins 3 molécules d'oléfine.

2. Copolymères I portant des groupements fonctionnels selon la revendication 1, pour lesquels le composant (a) est l'anhydride maléique et le composant (b) est un oligopropène ou un mélange d'oligopropènes ayant chacun 9-400 atomes de C.

3. Procédé de préparation de copolymères I portant des groupements fonctionnels selon la revendication 1 ou 2, caractérisé en ce que l'on polymérise de façon radicalaire
(a) 30-70% en moles d'au moins un acide dicarboxylique en C₄-C₁₂ à insaturation monoéthylénique ou de son anhydride et
(b) 30-70% en moles d'au moins un oligomère d'une 1-oléfine ayant 3-14 atomes de C, se trouvant pour au moins 85% sous la forme d'un isomère comportant un groupement vinyle terminal de formule -CH=CH₂, présentant une masse moléculaire moyenne de 300-10 000 et construit à partir d'au moins 3 molécules d'oléfine.

4. Produits II de la réaction de copolymères I selon la revendication 1 ou 2, avec des composés NH-, OH- ou SH-fonctionnels.

5. Produits IIa de la réaction de copolymères I selon la revendication 1 ou 2, avec un hydroxyde aqueux de métal alcalin ou alcalino-terreux.

6. Utilisation de produits réactionnels IIa selon la revendication 5 sous forme de dispersions aqueuses en tant qu'agent de dispersion pour des formulations d'agents de lavage et de nettoyage.

7. Formulations aqueuses d'agents de lavage et de nettoyage, contenant des produits réactionnels IIa selon la revendication 5 en tant qu'agent de dispersion dans des quantités usuelles.

8. Utilisation de produits réactionnels IIa selon la revendication 5 sous forme de dispersions aqueuses en tant qu'agent hydrophobant pour les cuirs et les peaux.

9. Produits IIb solubles dans l'huile, de la réaction de copolymères I selon la revendication 1 ou 2, avec des alcools aliphatiques saturés ou insaturés ayant de 8 à 30 atomes de C.

10. Utilisation de produits réactionnels IIb solubles dans l'huile selon la revendication 9, en tant qu'agent fluidifiant et agent dispersant la paraffine pour des huiles brutes et des huiles minérales raffinées.

11. Huiles brutes et huiles minérales raffinées contenant des produits réactionnels IIb solubles dans l'huile selon la revendication 9 en tant qu'agent fluidifiant et agent dispersant la paraffine en quantités usuelles.

12. Produits IIc de la réaction de copolymères I selon la revendication 1 ou 2, avec des mono- ou polyamines primaires, secondaires ou tertiaires portant au moins un reste alkyle en C₆-C₃₀ ou alkylène en C₆-C₃₀.

13. Utilisation de produits réactionnels IIc selon la revendication 12 en tant qu'agent inhibiteur de la corrosion pour des substrats métalliques.

14. Produits IId solubles dans l'huile, de la réaction de copolymères I selon la revendication 1 ou 2, avec des amines de formule HNR¹R², où les restes R¹ et R² peuvent être identiques ou différents et représentent des atomes d'hydrogène, des restes d'hydrocarbures aliphatiques ou aromatiques, des restes aminoalkylène primaire ou secondaire, aromatiques ou aliphatiques, des restes polyaminoalkylène, des restes hydroxyalkylène, des restes polyoxyalkylène, portant éventuellement des groupements amino terminaux, des restes hétéroaryle ou hétérocyclyle, portant éventuellement des groupements amino terminaux, ou bien ils peuvent former ensemble avec l'atome d'azote auquel ils sont liés, un cycle pouvant contenir d'autres hétéroatomes.

15. Utilisation de produits réactionnels IId solubles dans l'huile selon la revendication 14 en tant qu'additifs pour lubrifiants et carburants.

16. Lubrifiant contenant des produits réactionnels IId solubles dans l'huile selon la revendication 14 en des quantités de 1-15% en poids.

17. Carburants contenant des produits réactionnels lld solubles dans l'huile selon la revendication 14 en des quantités de 20-5000 ppm.
